# EUROPÄISCHE PATENTSCHRIFT

(11) **EP 4 311 802 B1**
(45) Veröffentlichungstag und Bekanntmachung des Hinweises auf die Patenterteilung: **20.08.2025**
(21) Anmeldenummer: 23173622.4
(22) Anmeldetag: 16.05.2023
(51) Int. Cl.: B66C 23/34, B60P 3/28, B60P 3/40

(54) **TRANSPORTACHSE FÜR DEN TRANSPORT EINES TURMDREHKRANS SOWIE VERFAHREN ZUM TRANSPORTIEREN EINES TURMDREHKRANS MITTELS EINER TRANSPORTACHSE**
TRANSPORT AXLE FOR TRANSPORTING A TOWER CRANE AND METHOD FOR TRANSPORTING A TOWER CRANE BY MEANS OF A TRANSPORT AXLE
ESSIEU DE TRANSPORT POUR LE TRANSPORT D'UNE GRUE À TOUR ET PROCÉDÉ DE TRANSPORT D'UNE GRUE À TOUR AU MOYEN D'UN ESSIEU DE TRANSPORT

(30) Priorität: 26.07.2022 DE 102022118683
(43) Veröffentlichungstag der Anmeldung: 31.01.2024
(73) Patentinhaber: Beutlhauser Holding GmbH, 94034 Passau (DE)
(72) Erfinder: GRILLMEIER, Benjamin, 94116 Hutthurm (DE)
(74) Vertreter: Manitz Finsterwald Patent- und Rechtsanwaltspartnerschaft mbB

(56) Entgegenhaltungen:
- DE-A1- 19 513 644
- DE-A1- 2 133 111
- FR-A1- 2 126 128
- FR-E- 71 095

## Beschreibung

Die vorliegende Erfindung betrifft eine Transportachse gemäß dem Oberbegriff des Anspruchs 1 für den Transport eines Turmdrehkrans sowie ein Verfahren zum Transportieren eines Turmdrehkrans mittels einer Transportachse.

Eine gattungsgemäße Transportachse ist der Art nach im Wesentlichen aus der FR 71 095 E bekannt. Weitergehender Stand der Technik ergibt sich ferner aus den Druckschriften FR 2 126 128 A1, DE 21 33 111 A1 und DE 195 13 644 A1.

Zum Transport von Turmdrehkranen kommen üblicherweise sogenannte Transportachsen zum Einsatz. Bei einer derartigen Transportachse handelt es sich um eine Art Anhänger, der von einem Zugfahrzeug wie beispielsweise einem LKW gezogen wird, um so einen auf der Transportachse befindlichen Turmdrehkran zu seinem Einsatzort bringen zu können.

Der Turmdrehkran liegt dabei üblicherweise zusammengeklappt mit seinem Turm auf der Transportachse auf, wobei der Turm über sogenannte Kranstützen, die an dem Ladeaufbau der Transportachse angebolzt sind, sein Gewicht auf den Ladeaufbau und somit auf die Transportachse überträgt. Der Kranballast des Turmdrehkrans in Form von Gegengewichtsblöcken aus Beton sowie weiteres Kranzubehör wie beispielsweise die Laufkatze werden hingegen auf dem Zugfahrzeug transportiert, beispielsweise auf der Ladefläche des LKWs, der die Transportachse zieht.

Allerdings kann das Gewicht des Kranballasts so groß sein, dass der gesamte Kranballast aufgrund der Begrenzung des zulässigen Gesamtgewichts des Zugfahrzeugs oder der Begrenzung der maximal zulässigen Achslast nicht vollständig auf dem Zugfahrzeug transportiert werden kann. Dementsprechend wird häufig ein weiterer LKW benötigt, um jene Gegengewichtsblöcke des Kranballasts, durch die das zulässige Gesamtgewicht des Zugfahrzeugs bzw. die maximal zulässige Achslast überschritten wird, zum Einsatzort des Turmdrehkrans transportieren zu können. In wirtschaftlicher Hinsicht ist jedoch der Einsatz eines zweiten LKWs nachteilhaft, da durch den Einsatz eines zweiten LKWs die Kosten für den Transport eines Turmdrehkrans deutlich ansteigen.

Der Erfindung liegt daher die Aufgabe zugrunde, zumindest eine Realisierung anzugeben, mittels derer sich ein Turmdrehkran einschließlich seines Kranzubehörs wie beispielsweise seines Kranballasts wirtschaftlich und insbesondere ohne den Einsatz eines weiteren Zugfahrzeugs, wie beispielsweise eines LKWs, transportieren lässt.

Gemäß einem ersten Aspekt der vorliegenden Erfindung wird diese Aufgabe mit einer Transportachse für den Transport eines Turmdrehkrans gelöst, die sich durch die Merkmale des Anspruchs 1 auszeichnet.

Die erfindungsgemäße Transportachse umfasst dabei in an sich herkömmlicher Art und Weise ein Fahrgestell, zumindest eine daran gelagerte Radachse mit zumindest zwei Rädern und einen von dem Fahrgestell getragenen Ladeaufbau, an dem üblicherweise die Kranstützen angebolzt sind/werden, auf denen der Turm des Turmdrehkrans aufliegt. Erfindungsgemäß zeichnet sich die Transportachse nun dadurch aus, dass der Ladeaufbau zusätzlich ein Transportgestell in Form eines Transportkäfigs zur Aufnahme von Kranzubehör trägt, insbesondere zur Aufnahme von Kranballast.

Das Transportgestell bzw. der Transportkäfig weist dabei in Längsrichtung der zumindest einen Radachse voneinander beabstandete erste Begrenzungen auf, mittels derer dazwischen befindliches Kranzubehör wie beispielsweise Gegengewichtsblöcke des Kranballasts gegen seitliches Verrutschen gesichert werden können.

Der Transportkäfig kann dabei beispielsweise zwischen zwei Kranstützen, die am Ladeaufbau der Transportachse angebolzt sind und den Turm eines Turmdrehkrans tragen, auf dem Ladeaufbau angeordnet und daran gesichert werden. Der Transportkäfig kann sich somit zwischen dem Ladeaufbau der Transportachse und einem darauf zu transportierenden Turmdrehkran befinden. Überschüssiges Kranzubehör, wie beispielsweise Kranballast, durch den das zulässige Gesamtgewicht des Zugfahrzeugs bzw. die maximal zulässige Achslast überschritten wird und das daher auf dem die Transportachse ziehenden Zugfahrzeug nicht transportiert werden darf, kann somit auf der Transportachse mitgeführt werden, da deren zulässiges Gesamtgewicht durch den darauf transportierten Kran in aller Regel noch nicht ausgeschöpft ist. Es muss daher kein weiterer LKW zum Einsatz kommen, um den überschüssigen Kranballast transportieren zu können. Das Kranzubehör in Form des überschüssigen Kranballasts ist dabei durch die ersten Begrenzungen des Transportkäfigs quer zur Fahrtrichtung der Transportachse gegen seitliches Verrutschen auf der Transportachse gesichert, so dass von der Transportachse transportiertes Kranzubehör nicht von derselben herunterfallen kann.

Gemäß einem weiteren Aspekt der vorliegenden Erfindung wird die derselben zugrundeliegende Aufgabe ferner mit einem Verfahren zum Transportieren eines Turmdrehkrans mittels einer Transportachse gelöst, wobei sich das Verfahren durch die Merkmale des Anspruchs 9 auszeichnet.

Im Folgenden wird nun auf weitere Ausführungsformen der erfindungsgemäßen Transportachse eingegangen. Weitere Ausführungsformen der Transportachse können sich auch aus den abhängigen Ansprüchen, der Figurenbeschreibung sowie den Figuren selbst ergeben.

So kann der Transportkäfig gemäß einer Ausführungsform zusätzlich zu den ersten Begrenzungen zweite Begrenzungen aufweisen, welche in Fahrtrichtung der Transportachse bzw. quer zur Längsrichtung der zumindest einen Radachse voneinander beabstandet sind, um so dazwischen befindliches Kranzubehör während des Transports in Fahrtrichtung sichern zu können. Zwar sind derartige zweite Begrenzungen nicht unbedingt erforderlich, wenn sich der Transportkäfig in der bereits zuvor erläuterten Art und Weise zwischen zwei Kranstützen befindet, da in diesem Falle das Kranzubehör in Fahrtrichtung der Transportachse durch die Kranstützen gegen Verrutschen gesichert werden kann. Liegt jedoch ein Turmdrehkran über entsprechende Kranstützen auf dem Transportkäfig auf, so stehen die Kranstützen nicht zur Ladungssicherung in Fahrtrichtung zur Verfügung, weshalb in diesem Falle das Kranzubehör durch die zweiten Begrenzungen des Transportkäfigs in Fahrtrichtung der Transportachse gegen Verrutschen während des Transports gesichert werden kann.

Gemäß einer weiteren Ausführungsform kann der Transportkäfig einen Trägerrost zur Auflage von Kranzubehör aufweisen, insbesondere zur Auflage von Kranballast, wobei sich die ersten und/oder zweiten Begrenzungen aus der von dem Trägerrost gebildeten Ebene heraus nach oben erstrecken und mit dem Trägerrost verbunden sind. Auch wenn der Trägerrost keine geschlossene Fläche bildet, so wird durch denselben dennoch eine ebene Begrenzung gebildet, die verhindert, dass auf dem Trägerrost befindliches Kranzubehör nach unten durchfallen kann.

Zwar kann es sich bei den ersten und/oder zweiten Begrenzungen um geschlossene Seitenwände handeln; gemäß einer weiteren Ausführungsform kann es jedoch vorgesehen sein, dass auch die Begrenzungen wie der Trägerrost durch einzelne Stäbe in Form von vorzugsweise frei nach oben auskragenden Stützen gebildet werden, so dass der gesamte Transportkäfig im statischen Sinne ein räumliches Stabwerk darstellt.

Insbesondere kann es dabei vorgesehen sein, dass die ersten Begrenzungen mehrere quer zur Längsrichtung der Radachse voneinander beabstandete erste Stützen umfassen, die jeweils ein erstes Ende aufweisen, das mit dem Trägerrost verbunden ist. Zusätzlich oder alternativ hierzu können auch die zweiten Begrenzungen mehrere in Längsrichtung der Radachse voneinander beabstandete zweite Stützen umfassen, die jeweils ein erstes Ende aufweisen, das mit dem Trägerrost verbunden ist. Bei dem Transportkäfig handelt es sich somit um ein verhältnismäßig filigran ausgebildetes Transportgestell, das nur ein geringes Gewicht aufweist und somit nur einen geringen Anteil am Zuggesamtgewicht ausmacht.

Wie bereits zuvor erläutert wurde, kann der Transportkäfig zwischen zwei an dem Ladeaufbau der Transportachse angebolzten Kranstützen angeordnet werden, so dass sich der Transportkäfig und damit das darin enthaltene Kranzubehör zwischen dem Ladeaufbau und einem auf den Kranstützen abgestützten Turmdrehkran befindet, dessen Gewicht über die Kranstützen direkt auf den Ladeaufbau übertragen wird.

Alternativ hierzu kann jedoch das Gewicht des Turmdrehkrans auch über den Transportkäfig auf den Ladeaufbau der Transportachse übertragen werden. Bei einer derartigen Ausführungsform kann der Transportkäfig ferner zumindest ein Last abtragendes Bauteil, wie beispielsweise einen Träger, eine Traverse oder aber auch ein in zwei Richtungen Last abtragendes Bauteil, wie beispielsweise einen Trägerrost, aufweisen, über das das Gewicht eines Turmdrehkrans zunächst auf den Transportkäfig übertragen wird, von wo aus das Gewicht dann weiter auf den Ladeaufbau der Transportachse abgetragen wird. Insbesondere kann es dabei vorgesehen sein, dass sich das Last abtragende Bauteil in einer zu der Ebene des Trägerrosts, auf der das Kranzubehör liegt, parallelen Ebene erstreckt und auf zumindest einigen der ersten Stützen und/oder der zweiten Stützen an deren dem jeweiligen ersten Ende gegenüberliegenden zweiten Ende aufliegt. Bei einem derartigen lastabtragenden Bauteil kann es sich somit beispielsweise um einen Träger handeln, der auf den in Längsrichtung der Radachse voneinander beabstandeten ersten Stützen aufliegt. Alternativ hierzu kann es sich bei dem Last abtragenden Bauteil jedoch auch um beispielsweise einen Trägerrost oder um eine Platte handeln, der bzw. die sowohl auf den in Längsrichtung der Radachse voneinander beabstandeten ersten Stützen als auch auf den quer dazu ausgerichteten zweiten Stützen aufliegt.

Um das Gewicht eines Turmdrehkrans auf das Last abtragende Bauteil übertragen zu können, kann das Last abtragende Bauteil seinerseits mehrere Kranstützen tragen, welche in an sich herkömmlicher Art und Weise zur Abstützung und Sicherung eines Turms eines Turmdrehkrans ausgebildet sind.

Da sich das Last abtragende Bauteil quer über den Transportkäfig erstreckt und somit den Zugang zum Inneren des Transportkäfigs erschwert, kann es gemäß einer weiteren Ausführungsform vorgesehen sein, dass das zumindest eine Last abtragende Bauteil lösbar mit dem Transportkäfig verbunden ist. Das Last abtragende Bauteil kann somit von dem Transportkäfig entfernt werden, um so den Zugang zum Inneren des Transportkäfigs zu erleichtern.

Alternativ hierzu kann das zumindest eine Last abtragende Bauteil gelenkig mit zumindest einer der ersten und/oder der zweiten Stützen verbunden sein. Um den Zugang zum Inneren des Transportkäfigs zu erleichtern, kann somit das zumindest eine Last abtragende Bauteil weg bzw. nach oben geschwenkt werden, so dass das Innere des Transportkäfigs nicht länger durch das Last abtragende Bauteil versperrt wird.

Im Folgenden wird nun eine Ausführungsform der Erfindung unter Bezugnahme auf die Figuren rein exemplarisch erläutert, in denen:
- Fig. 1: eine schematische Darstellung einer erfindungsgemäßen Transportachse in einer Seitenansicht zeigt; und
- Fig. 2 bis 5: perspektivische Darstellungen des in der Fig. 1 erkennbaren Transportkäfigs zeigen.

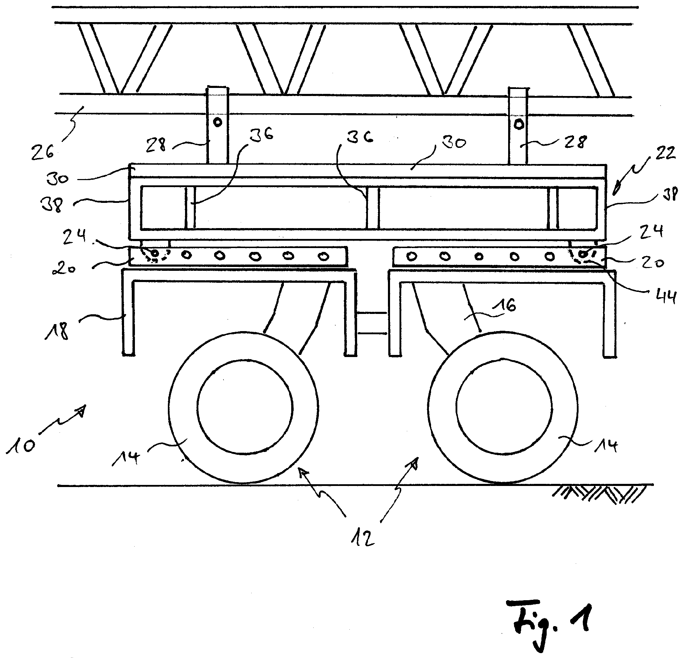

Die in der Fig. 1 dargestellte Transportachse 10 weist zwei Radachsen 12 auf, wobei an jeder Radachse 12 zwei quer zur Fahrtrichtung voneinander beabstandete Räder 14 montiert sind. Die beiden Radachsen 12 tragen ein Fahrgestell 16, das seinerseits wiederum einen Ladeaufbau 18 trägt. Der Ladeaufbau 18 umfasst dabei an seiner Oberseite quer zur Fahrtrichtung voneinander beabstandete Lochschienen 20, an denen üblicherweise Kranstützen angebolzt werden können, auf denen dann der Turm eines Turmdrehkrans für den Transport aufgelegt und an den Kranstützen beispielsweise mittels Bolzen gesichert werden kann.

Im Unterschied zu dieser herkömmlichen Art der Anbringung eines Turmdrehkrans am Ladeaufbau 18 bzw. dessen Lochschienen 20 ist es erfindungsgemäß vorgesehen, dass an dem Ladeaufbau 18 und insbesondere an dessen Lochschienen 20 ein Transportkäfig 22 mittels Bolzen 24 befestigt ist, wobei dieser Transportkäfig 22 zur Aufnahme von Kranzubehör wie beispielsweise von Kranballast dient.

Bei der hier dargestellten Ausführungsform ist der Turm 26 eines Turmdrehkrans auf in Fahrtrichtung voneinander beabstandeten Kranstützen 28 abgestützt, die ihrerseits an der Oberseite, insbesondere an einem den Transportkäfig 22 verschließenden Deckel 30, befestigt sind, der als Platte ausgeführt ist. Alternativ hierzu kann der Turm 26 jedoch auch direkt an dem Ladeaufbau 18 abgestützt sein/werden, wobei sich dann der Transportkäfig 22 in dem Zwischenraum zwischen dem Ladeaufbau 18 und dem Turm 26 des Turmdrehkrans befindet. Beispielsweise kann der Turm 26 mittels in Fahrtrichtung voneinander beabstandeten Transportstützen auf dem Ladeaufbau 18 abgestützt werden, wobei sich der Transportkäfig 22 in vertikaler Richtung in dem Zwischenraum zwischen dem Turm 26 des Turmdrehkrans und dem Ladeaufbau und in horizontaler Richtung zwischen den beiden Kranstützen befindet.

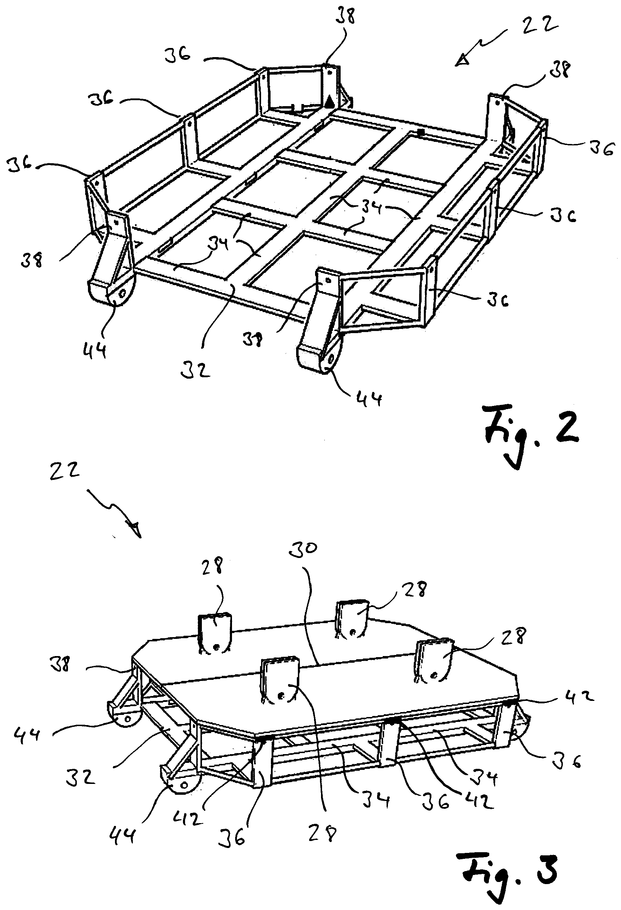

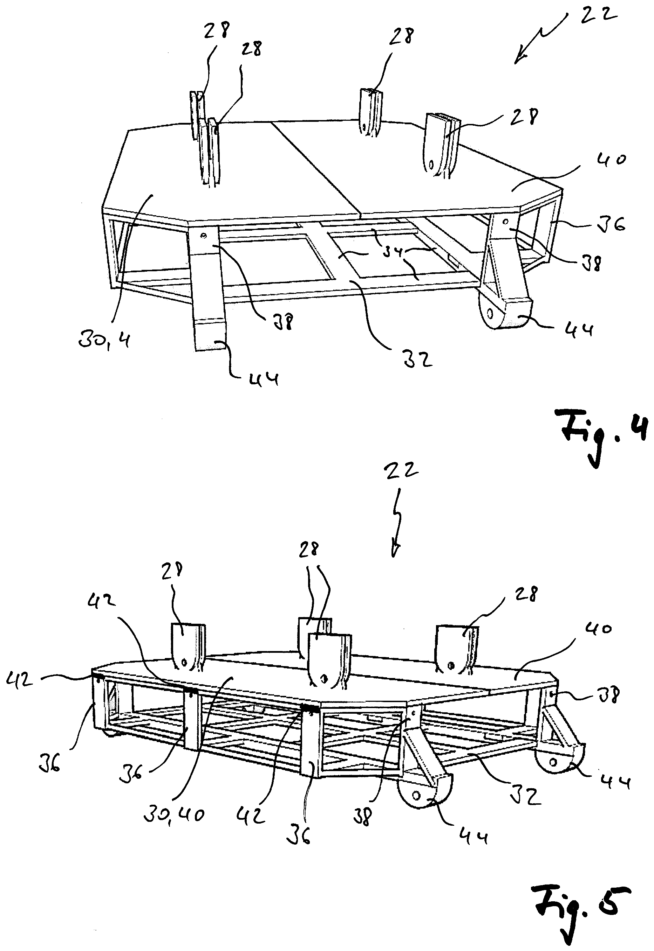

Im Folgenden wird nun unter Bezugnahme auf die Fig. 2 bis 5 der konstruktive Aufbau des Transportkäfigs 22 genauer beschrieben. Wie insbesondere der Fig. 2 entnommen werden kann, weist der Transportkäfig 22 einen Trägerrost 30 auf, welcher sich aus mehreren in einer Ebene miteinander verschweißten Trägern 34 zusammensetzt, welche sich in Fahrtrichtung sowie quer zur Fahrtrichtung erstrecken. Der Trägerrost 32 dient somit als Auflagefläche von Kranzubehör, welches von dem Transportkäfig 22 aufgenommen werden soll. Darüber hinaus weist der Transportkäfig 22 in Längsrichtung der Radachsen 12 voneinander beabstandete Begrenzungen in Form erster Stützen 36 auf, wobei sich diese ersten Stützen 36 aus der von dem Trägerrost 32 gebildeten Ebene heraus nach oben erstrecken und seitlich mit dem Trägerrost 32 verbunden sind, beispielsweise durch Schweißverbindungen. Durch die ersten Stützen 36 wird somit ein seitliches Verrutschen von im Inneren des Transportkäfigs 22 befindlichem Kranzubehör verhindert.

Darüber hinaus weist der Transportkäfig 22 in Fahrtrichtung der Transportachse 10 bzw. quer zur Längsrichtung der Radachsen 12 voneinander beabstandete Begrenzungen in Form zweiter Stützen 38 auf, welche sich ebenfalls aus der von dem Trägerrost 32 gebildeten Ebene heraus nach oben erstrecken und mit dem Trägerrost 32 beispielsweise durch Schweißverbindungen verbunden sind. Durch die zweiten Stützen 38 kann somit ein Verrutschen von im Inneren des Transportkäfigs 22 befindlichem Kranzubehör in Fahrtrichtung der Transportachse 10 verhindert werden.

Wie den Fig. 3 bis 5 des Weiteren entnommen werden kann, wird der Transportkäfig 22 an seiner Oberseite durch einen Deckel 30 verschlossen, der bei der hier dargestellten Ausführungsform durch zwei massive Platten 40 beispielsweise aus Stahl gebildet wird. Bei der hier dargestellten Ausführungsform sind an der Außenoberfläche jeder dieser Platten 40 zwei hier nur teilweise dargestellte Kranstützen 28 befestigt, welche in der bereits zuvor erläuterten Art und Weise dazu dienen, um auf diesen den Turm 26 eines Turmdrehkrans abstützen zu können. Das Gewicht des Turmdrehkrans wird somit über die Kranstützen 28 auf die beiden Platten 40 und von dort auf die Stützen 36, 38 des Transportkäfigs 22 übertragen, auf denen die beiden Platten 40 aufliegen. Bei den beiden Platten 40 handelt es sich somit um Last abtragende Bauteile zur Abtragung des Gewichts des Turmdrehkrans auf den Transportkäfig 22. Die beiden Platten 40 erstrecken sich dabei in einer zur Ebene des Trägerrosts 32 parallelen Ebene und verschließen somit die Oberseite des Transportkäfigs 22.

Um Kranzubehör ins Innere des Transportkäfigs 22 einbringen zu können, können die beiden Platten 40 von dem Transportkäfig 22 entfernt und anschließend wieder aufgebracht werden, so dass das Kranzubehör allseitig von dem Transportkäfig 22 umschlossen ist. Alternativ hierzu können die beiden Platten 40 mittels Scharnieren 42 mit den freien Enden der ersten Stützen 36 verbunden sein, so dass die beiden Platten 40 nach oben geschwenkt werden können, um Kranzubehör ins Innere des Transportkäfigs 22 einbringen zu können.

Wie den Fig. 2 bis 5 des Weiteren entnommen werden kann, sind an den freien Enden der Längsträger 34 des Trägerrosts 32 vier Bolzenlaschen 44 befestigt, mittels derer der Transportkäfig 22 gemäß Fig. 1 an den Lochschienen 20 des Ladeaufbaus 18 der Transportachse 10 mit Hilfe von Bolzen 24 befestigt werden kann. Der Transportkäfig 22 ist somit lösbar mit dem Ladeaufbau 18 verbunden. Ist es daher erwünscht, die Transportachse 10 zum Transport eines Turmdrehkrans ohne den Transportkäfig 22 zu verwenden, so kann der Transportkäfig 22 von der Transportachse 10 entfernt werden.

Mittels der erfindungsgemäßen Transportachse 10 lässt sich somit Kranzubehör zusätzlich zu einem Turmdrehkran transportieren, indem in dem Zwischenraum zwischen dem Ladeaufbau 18 und einem auf dem Ladeaufbau 18 abgestützten Turmdrehkran das Kranzubehör angeordnet und mittels des Transportkäfigs 22 gesichert wird. Kranzubehör und insbesondere Kranballast, durch den das zulässige Gesamtgewicht eines die Transportachse ziehenden Zugfahrzeugs oder die maximal zulässige Achslast überschritten wird, muss somit nicht mittels eines zusätzlichen LKWs transportiert werden, da dieses auf der Transportachse selbst zum Einsatzort des Krans transportiert werden kann.

### Bezugszeichenliste

- 10: Transportachse
- 12: Radachsen
- 14: Räder
- 16: Fahrgestell
- 18: Ladeaufbau
- 20: Lochschienen
- 22: Transportkäfig
- 24: Bolzen
- 26: Turm
- 28: Kranstützen
- 30: Deckel
- 32: Trägerrost
- 34: Träger
- 36: erste Stützen
- 38: zweite Stützen
- 40: Platten
- 42: Scharnier
- 44: Bolzenlaschen

## Patentansprüche

1. Transportachse (10) für den Transport eines Turmdrehkrans, mit einem Fahrgestell (16), zumindest einer daran gelagerten Radachse (12) mit zumindest zwei Rädern (14) und einem von dem Fahrgestell (16) getragenen Ladeaufbau (18) zur Aufnahme eines Turmdrehkrans; wobei der Ladeaufbau (18) einen Transportkäfig (22) zur Aufnahme von Kranzubehör trägt, insbesondere zur Aufnahme von Kranballast, wobei der Transportkäfig (22) in Längsrichtung der Radachse (12) voneinander beabstandete erste Begrenzungen zur seitlichen Transportsicherung von dazwischen aufnehmbarem Kranzubehör aufweist;
**dadurch gekennzeichnet, dass**
der Transportkäfig (22) lösbar mit dem Ladeaufbau (18) verbunden ist.

2. Transportachse (10) nach Anspruch 1,
**dadurch gekennzeichnet,**
**dass** der Transportkäfig (22) ferner in Fahrtrichtung der Transportachse (10) voneinander beabstandete zweite Begrenzungen zur Transportsicherung von dazwischen aufnehmbarem Kranzubehör aufweist.

3. Transportachse (10) nach Anspruch 1 oder 2,
**dadurch gekennzeichnet,**
**dass** der Transportkäfig (22) einen Trägerrost (32) zur Auflage von Kranzubehör aufweist, insbesondere zur Auflage von Kranballast, wobei sich die Begrenzungen aus der von dem Trägerrost (32) gebildeten Ebene heraus erstrecken und mit dem Trägerrost (32) verbunden sind.

4. Transportachse (10) nach einem der vorstehenden Ansprüche,
**dadurch gekennzeichnet,**
**dass** die ersten Begrenzungen mehrere quer zur Längsrichtung der Radachse (12) voneinander beabstandete erste Stützen (36) umfassen, die ein erstes Ende aufweisen, das mit dem Trägerrost (32) verbunden ist; und/oder
**dass** die zweiten Begrenzungen mehrere in Längsrichtung der Radachse (12) voneinander beabstandete zweite Stützen (38) umfassen, die ein erstes Ende aufweisen, das mit dem Trägerrost (32) verbunden ist.

5. Transportachse (10) nach einem der vorstehenden Ansprüche,
**dadurch gekennzeichnet,**
**dass** der Transportkäfig (22) ferner zumindest ein Last abtragendes Bauteil (30, 40) zur Abtragung des Gewichts eines Turmdrehkrans auf den Transportkäfig (22) aufweist, wobei es insbesondere vorgesehen ist, dass sich das Last abtragende Bauteil (30, 40) in einer zu der Ebene des Trägerrosts (32) parallelen Ebene erstreckt und auf zumindest einigen der ersten Stützen (36) und/oder der zweiten Stützen (38) an deren dem jeweiligen ersten Ende gegenüberliegenden zweiten Ende aufliegt.

6. Transportachse (10) nach Anspruch 5,
**dadurch gekennzeichnet,**
**dass** das zumindest eine Last abtragende Bauteil (30, 40) zumindest eine Kranstütze (28) trägt, die zur Abstützung und Sicherung eines Turms (26) eines Turmdrehkrans ausgebildet ist.

7. Transportachse (10) nach Anspruch 5 oder 6,
**dadurch gekennzeichnet,**
**dass** das zumindest eine Last abtragende Bauteil (30, 40) gelenkig mit zumindest einer der Stützen (36, 38) verbunden ist.

8. Transportachse (10) nach einem der vorstehenden Ansprüche,
**dadurch gekennzeichnet,**
**dass** der Transportkäfig (22) mittels einer Bolzenverbindung lösbar mit dem Ladeaufbau (18) verbunden ist.

9. Verfahren zum Transportieren eines Turmdrehkrans mittels einer Transportachse (10), die ein Fahrgestell (16), zumindest eine daran gelagerte Radachse (12) mit zumindest zwei Rädern (14) und einen von dem Fahrgestell (16) getragenen Ladeaufbau (18) zur Aufnahme eines Turmdrehkrans aufweist, wobei auf dem Ladeaufbau (18) ein Turmdrehkran unter Bildung eines Zwischenraums zwischen dem Ladeaufbau (18) und dem Turmdrehkran abgestützt wird, wobei in dem Zwischenraum zwischen dem Ladeaufbau (18) und dem Turmdrehkran Kranzubehör angeordnet und gesichert wird, das unter Verwendung eines Transportkäfigs (22) gesichert wird, der in Längsrichtung der Radachse (12) voneinander beabstandete erste Begrenzungen zur seitlichen Transportsicherung von dazwischen aufnehmbaren Kranzubehör aufweist und der lösbar mit dem Ladeaufbau (18) verbunden wird.

## Claims

1. A transport axle (10) for transporting a tower crane, said transport axle (10) comprising a chassis (16), at least one wheel axle (12) supported thereat and comprising at least two wheels (14), and a loading structure (18) carried by the chassis (16) for receiving a tower crane; wherein the loading structure (18) carries a transport cage (22) for receiving crane accessories, in particular for receiving crane ballast, wherein the transport cage (22) has first boundaries spaced apart from one another in the longitudinal direction of the wheel axle (12) for the lateral transport securing of crane accessories that can be received between said first boundaries;
**characterized in that**
the transport cage (22) is releasably connected to the loading structure (18).

2. A transport axle (10) according to claim 1,
**characterized in that**
the transport cage (22) further has second boundaries spaced apart from one another in the direction of travel of the transport axle (10) for the transport securing of crane accessories that can be received between said second boundaries.

3. A transport axle (10) according to claim 1 or 2,
**characterized in that**
the transport cage (22) has a support grid (32) for supporting crane accessories, in particular for supporting crane ballast, with the boundaries extending out of the plane formed by the support grid (32) and being connected to the support grid (32).

4. A transport axle (10) according to any one of the preceding claims, **characterized in that**
the first boundaries comprise a plurality of first supports (36) which are spaced apart from one another transversely to the longitudinal direction of the wheel axle (12) and which have a first end that is connected to the support grid (32); and/or
**in that** the second boundaries comprise a plurality of second supports (38) which are spaced apart from one another in the longitudinal direction of the wheel axle (12) and which have a first end that is connected to the support grid (32).

5. A transport axle (10) according to any one of the preceding claims, **characterized in that**
the transport cage (22) further has at least one load-transferring component (30, 40) for transferring the weight of a tower crane to the transport cage (22), with it in particular being provided that the load-transferring component (30, 40) extends in a plane parallel to the plane of the support grid (32) and rests on at least some of the first supports (36) and/or the second supports (38) at their second end disposed opposite the respective first end.

6. A transport axle (10) according to claim 5,
**characterized in that**
the at least one load-transferring component (30, 40) carries at least one crane support (28) which is configured to support and secure a tower (26) of a tower crane.

7. A transport axle (10) according to claim 5 or 6,
**characterized in that**
the at least one load-transferring component (30, 40) is connected in an articulated manner to at least one of the supports (36, 38).

8. A transport axle (10) according to any one of the preceding claims, **characterized in that**
the transport cage (22) is releasably connected to the support structure (18) by means of a bolt connection.

9. A method for transporting a tower crane by means of a transport axle (10) which has a chassis (16), at least one wheel axle (12) supported thereat and comprising at least two wheels (14), and a loading structure (18) carried by the chassis (16) for receiving a tower crane, wherein a tower crane is supported on the loading structure (18) while forming an intermediate space between the loading structure (18) and the tower crane, wherein, in the intermediate space between the loading structure (18) and the tower crane, crane accessories are arranged and secured that are secured using a transport cage (22) which has first boundaries, which are spaced apart from one another in the longitudinal direction of the wheel axle (12) for the lateral transport securing of crane accessories that can be received between said first boundaries, and which is releasably connected to the loading structure (18).

## Revendications

1. Essieu de transport (10) pour le transport d'une grue à tour, comprenant un châssis (16), au moins un essieu de roue (12) monté sur celui-ci et pourvu d'au moins deux roues (14), et une structure de chargement (18) portée par le châssis (16) et destinée à recevoir une grue à tour ;
dans lequel
la structure de chargement (18) porte une cage de transport (22) destinée à recevoir des accessoires de grue, en particulier à recevoir un lest de grue, la cage de transport (22) comprend des premières délimitations espacées les unes des autres dans la direction longitudinale de l'essieu de roue (12) et destinées à fixer latéralement, pendant le transport, les accessoires de grue pouvant être reçus entre elles ;
**caractérisé en ce que**
la cage de transport (22) est reliée de manière amovible à la structure de chargement (18).

2. Essieu de transport (10) selon la revendication 1,
**caractérisé en ce que**
la cage de transport (22) comprend en outre des deuxièmes délimitations espacées les unes des autres dans la direction de déplacement de l'essieu de transport (10) et destinées à fixer, pendant le transport, les accessoires de grue pouvant être reçus entre elles.

3. Essieu de transport (10) selon la revendication 1 ou 2,
**caractérisé en ce que**
la cage de transport (22) comprend une grille de support (32) destinée à supporter les accessoires de grue, en particulier à supporter le lest de grue, les délimitations s'étendant hors du plan formé par la grille de support (32) et étant reliées à la grille de support (32).

4. Essieu de transport (10) selon l'une des revendications précédentes, **caractérisé en ce que**
les premières délimitations comprennent une pluralité de premiers montants (36) espacés les uns des autres transversalement à la direction longitudinale de l'essieu de roue (12), qui présentent une première extrémité reliée à la grille de support (32) ;
et/ou
**en ce que** les deuxièmes délimitations comprennent plusieurs deuxièmes montants (38) espacés les uns des autres dans la direction longitudinale de l'essieu de roue (12), qui présentent une première extrémité reliée à la grille de support (32).

5. Essieu de transport (10) selon l'une des revendications précédentes, **caractérisé en ce que**
la cage de transport (22) comprend en outre au moins un composant de reprise de charge (30, 40) pour reprendre le poids d'une grue à tour sur la cage de transport (22), et, en particulier, il est prévu que le composant de reprise de charge (30, 40) s'étend dans un plan parallèle au plan de la grille de support (32) et repose sur au moins certains des premiers montants (36) et/ou des deuxièmes montants (38) à leur deuxième extrémité opposée à la première extrémité respective.

6. Essieu de transport (10) selon la revendication 5,
**caractérisé en ce que**
ledit au moins un composant de reprise de charge (30, 40) porte au moins un support de grue (28) conçu pour supporter et fixer une tour (26) d'une grue à tour.

7. Essieu de transport (10) selon la revendication 5 ou 6,
**caractérisé en ce que**
ledit au moins un composant de reprise de charge (30, 40) est relié de manière articulée à l'un au moins des supports (36, 38).

8. Essieu de transport (10) selon l'une des revendications précédentes, **caractérisé en ce que**
la cage de transport (22) est reliée de manière amovible à la structure de chargement (18) au moyen d'une liaison par boulons.

9. Procédé de transport d'une grue à tour au moyen d'un essieu de transport (10) qui comprend un châssis (16), au moins un essieu de roue (12) monté sur celui-ci et pourvu d'au moins deux roues (14), et une structure de chargement (18) portée par le châssis (16) et destinée à recevoir une grue à tour, une grue à tour étant supportée sur la structure de chargement (18) en formant un espace intermédiaire entre la structure de chargement (18) et la grue à tour,
des accessoires de grue étant disposés et fixés dans l'espace intermédiaire entre la structure de chargement (18) et la grue à tour, qui sont fixés à l'aide d'une cage de transport (22) qui comprend des premières délimitations espacées les unes des autres dans la direction longitudinale de l'essieu de roue (12) et destinées à fixer latéralement, pendant le transport, les accessoires de grue pouvant être reçus entre elles et qui est reliée de manière amovible à la structure de chargement (18).
